# EUROPEAN PATENT APPLICATION

(11) **EP 3 213 632 A1**
(43) Date of publication of application: **06.09.2017**
(21) Application number: 17157096.3
(22) Date of filing: 21.02.2017
(51) Int. Cl.: A01N 25/00, A01N 25/12, A01N 25/14, A01N 25/22, A01N 63/02, A01P 3/00, A01P 7/04, A01P 13/00, A01P 21/00

(54) **AGROCHEMICAL COMPOSITE PARTICLES AND PRODUCTION METHOD THEREOF**

(30) Priority: 01.03.2016 JP 2016038675
(71) Applicant: SUMITOMO CHEMICAL COMPANY, LIMITED, Chuo-ku Tokyo 104-8260 (JP)
(72) Inventor: YANAGISAWA, Kazuyuki, Tokyo 104-8260 (JP); KAWANAKA, Hideo, Takarazuka-shi, Hyogo 665-8555 (JP); YANO, Takaaki, Ichihara-shi, Chiba 299-0195 (JP); HIROTOMI, Dai, Kasai-shi, Hyogo 675-2333 (JP); SAKAMOTO, Norihisa, Takarazuka-shi, Hyogo 665-8555 (JP)
(74) Representative: Winter, Brandl, Fürniss, Hübner, Röss, Kaiser, Polte - Partnerschaft mbB

(57) **Abstract**

There is provided an agrochemical formulation with an enhanced efficacy of the agrochemical active ingredient, even when a farmer does not perform a mixing operation. Agrochemical active ingredient particles that are solid at 25°C and carbon black particles are mixed to form a layer comprising the carbon black particles on the surface of the agrochemical active ingredient particles.

## Description

### BACKGROUND OF THE INVENTION

### Field of the Invention

The present invention relates to agrochemical composite particles in which solid agrochemical active ingredient particles coated with carbon black and a production method thereof.

### Description of the Related Art

So far, various studies have been conducted for the purpose of enhancing an efficacy of agrochemical active ingredients. For example, a method for enhancing an efficacy of an agrochemical active ingredient in an agrochemical formulation, by mixing the agrochemical formulation with a compound having a specific polyoxyalkylene structure in the molecule and applying it is known (see WO 2009/028454). However, in that method, a farmer needed to mix an agrochemical formulation with the compound.

### SUMMARY OF THE INVENTION

The present invention provides an agrochemical formulation with an enhanced efficacy of the agrochemical active ingredient, even when a farmer does not perform a mixing operation.

The present invention is as described below.
[1] A method for producing agrochemical composite particles, including a step of mixing agrochemical active ingredient particles that are solid at 25°C and carbon black particles to form a layer comprising the carbon black particles on the particle surface of the agrochemical active ingredient, wherein the step is performed by a mechanical particle composing method.
[2] The method for producing agrochemical composite particles according to [1], wherein the particle diameter of the agrochemical active ingredient particles is in the range of 0.5 to 200 µm.
[3] The method for producing agrochemical composite particles according to [1] or [2], wherein the particle diameter of the carbon black particles is one fifth or less of the particle diameter of the agrochemical active ingredient particles.
[4] A method for producing an agrochemical formulation, including a step of formulating agrochemical composite particles produced by the method for producing agrochemical composite particles as defined in any one of [1] to [3].
[5] A method for enhancing an efficacy of an agrochemical active ingredient, including a step of mixing agrochemical active ingredient particles that are solid at 25°C and carbon black particles to form a layer comprising the carbon black particles on the particle surface of the agrochemical active ingredient.
[6] Agrochemical composite particles comprising carbon black and an agrochemical active ingredient that is solid at 25°C, having a layer comprising the carbon black particles on the particle surface of the agrochemical active ingredient.

According to the present invention, an efficacy of a solid agrochemical active ingredient can be enhanced. An agrochemical formulation obtained by formulating the agrochemical composite particles of the present invention (hereinafter, referred to as the present composite particles) can save the labor for farm work since a farmer does not need to mix an efficacy -enhancing component on an application. Also, the present composite particles have almost same particle diameter as the particle diameter of the agrochemical active ingredient before being coated, and can be formulated similarly as an uncoated agrochemical active ingredient.

### BRIEF DESCRIPTION OF THE DRAWINGS

Fig. 1 is an electron micrograph of the present composite particles (Test Example 1);
Fig. 2 is an electron micrograph of the cross section of the present composite particles (Test Example 2); and
Fig. 3 is a graph showing a thickness distribution of a carbon black layer of the present composite particles (Test Example 2).

### DETAILED DESCRIPTION OF THE PREFERRED EMBODIMENTS

The agrochemical active ingredient in the present invention is an agrochemical active ingredient that is solid at 25°C, and its melting point is preferably 70°C or more. Examples of the agrochemical active ingredient include insecticidal active ingredients, fungicidal active ingredients, herbicidal active ingredients, insect growth regulating active ingredients, and plant growth regulating active ingredients.

Examples of the insecticidal active ingredient and insect growth regulating active ingredient include biological agrochemicals such as Bacillus thuringiensis; pyrethroid compounds such as deltamethrin, tralomethrin, acrinathrin, tetramethrin, and tefluthrin; carbamate compounds such as propoxur, isoprocarb, xylylcarb, metolcarb, thiodicarb, XMC, carbaryl, pyrimicarb, carbofuran, methomyl, fenoxycarb, and fenobucarb; organophosphorus compounds such as acephate, trichlorfon, tetrachlorvinphos, dimethylvinphos, pyridafenthion, azinphos-ethyl, and azinphos-methyl; urea compounds such as diflubenzuron, chlorfluazuron, lufenuron, hexaflumuron, flufenoxuron, flucycloxuron, cyromazine, diafenthiuron, hexythiazox, novaluron, teflubenzuron, triflumuron, 4-chloro-2-(2-chloro-2-methylpropyl)-5-(6-iodo-3-pyridylmet hoxy)pyridazin-3(2H)-one, 1-(2,6-difluorobenzoyl)-3-[2-fluoro-4-(trifluoromethyl)phen yl]urea, 1-(2,6-difluorobenzoyl)-3-[2-fluoro-4-(1,1,2,3,3,3-hexafluo ropropoxy)phenyl]urea, 2-tert-butylimino-3-isopropyl-5-phenyl-3,4,5,6-tetrahydro-2 H-1,3,5-thiadiazon-4-one, and 1-(2,6-difluorobenzoyl)-3-[2-fluoro-4-(1,1,2,2-tetrafluoroe thoxy)phenyl]urea; chloronicotyl compounds such as imidacloprid, acetamiprid, clothianidin, nitenpyram, thiamethoxam, dinotefuran, and thiacloprid; spinosyns such as spinosad; diamide compounds such as flubendiamide, chlorantraniliprole, and cyantraniliprole; phenylpyrazole compounds such as f ipronil and ethiprole; tetramic acid compounds such asspirotetramat, spiromesifen,andspirodiclofen; cartap, buprofezin, thiocyclam, bensultap, fenazaquin, fenpyroximate, pyridaben, hydramethylnon, chlorfenapyr, fenproxymate, pymetrozine, pyrimidifen, tebufenozide, tebufenpyrad, triazamate, indoxacarb, sulfluramid, milbemectin, avermectin, boric acid and p-dichlorobenzene.

Examples of the fungicidal active ingredient include pyrazolinone compounds such as fenpyrazamine; mandestrobin; benzimidazole compounds such as benomyl, carbendazim, thiabendazole, and thiophanate-methyl; phenyl carbamate compounds such as diethofencarb; dicarboxylmide compounds such asprocymidone,iprodione,and vinclozolin;azole compoundssuch as diniconazole, probenazole, epoxyconazole, tebuconazole, difenoconazole, cyproconazole, flusilazole, and triadimefon; acylalanine compounds such as metalaxyl; carboxamide compounds such as furametpyr, mepronil, flutolanil, and trifluzamide; organophosphorus compounds such as tolclophos-methyl, fosetyl-aluminum, and pyrazophos; anilinopyrimidine compounds such aspyrimethanil, mepanipyrim, and cyprodinil; cyanopyrrole compounds such as fludioxonil and fenpiclonil; antibiotics such as blastocidin S, kasugamycin, polyoxin, and validamycin; methoxyacrylate compounds such as azoxystrobin, kresoxim-methyl, andSSF-126; chlorothalonil, mancozeb, captan, folpet, tricyclazole, pyroquilon, probenazole, fthalide, cymoxanil, dimethomorph, famoxadone, oxolinic acid, fluazinam, ferimzone, diclocymet, chlobenthiazone, isovaledione, tetrachloroisophthalonitrile, thiophthalimideoxybisphenoxyarsine, 3-iodo-2-propylbutyl carbamate,p-hydroxybenzoate, sodiumdehydroacetate,potassium sorbate, orysastrobin, isotianil, tiadinil, and thiuram.

Examples of the herbicidal active ingredient include triazine compounds such as atrazine and metribuzin; urea compounds such as fluometuron and isoproturon; hydroxybenzonitrile compounds such as bromoxynil and ioxynil; 2,6-dinitroaniline compounds such as pendimethalin and trifluralin; aryloxyalkanoic acid compounds such as 2,4-D, dicamba, fluroxypyr, and mecoprop; sulfonylurea compounds such as bensulfuron-methyl, metsulfuron-methyl, nicosulfuron, primisulfuron-methyl, cyclosulfamuron, imazosulfuron, propyrisulfuron, and sulfosulfuron; imidazolinone compounds such asimazapyr,imazaquin,andimazethapyr;bispyribac-Nasalt, bisthiobac-Na salt, acifluorfen-Na salt, sulfentrazone, paraquat, flumetsulam, triflusulfuron-methyl, fenoxaprop-p-ethyl, diflufenican, norflurazone, isoxaflutole, glufosinate-ammonium, glyphosate, bentazon, mefenacet, propanil, flutiamide, flumiclorac-pentyl, flumioxazin, bromobutide, and the like.

Examples of the plant growth regulating active ingredient include maleic hydrazide, clormequat, ethephon, gibberellin, mepiquat chloride, thidiazuron, inabenfide, paclobutrazol, and uniconazole.

As the agrochemical active ingredient in the present invention, fenpyrazamine, flumioxazin, clothianidin and Bacillus thuringiensis are preferred.

The particle diameter of the agrochemical active ingredient particles in the present invention is in the range of 0.5 to 200 µm. The particle diameter of the agrochemical active ingredient particles is determined according to the form of selected formulation (formulation type) when formulating the present composite particles. In the case of a formulation type applied as it is (for example, dust formulation and granules), the particle diameter is usually in the range of 1 to 200 µm, preferably 3 to 100 µm, and further preferably 5 to 50 µm, and in the case of a formulation type applied in admixture with water (for example, suspension concentrate and wettable powder), the particle diameter is usually in the range of 0.5 to 100 µm, preferably 1 to 50 µm, and further preferably 1 to 25 µm. In the present invention, the particle diameter of the agrochemical active ingredient particles means a particle diameter at which a cumulative frequency in a volume-based frequency distribution is to be 50%, and can be obtained by wet measurement using a laser diffraction particle diameter distribution measuring apparatus. More specifically, the agrochemical active ingredient particles are dispersed in water, and the particle diameter is measured using the apparatus. Examples of the laser diffraction particle size distribution measuring apparatus include Mastersizer 2000 manufactured by Malvern Instruments Ltd.

In the present invention, agrochemical active ingredient powder pulverized using a pulverizer, as necessary, is used as agrochemical active ingredient particles. Examples of the pulverizer include a jet mill and a centrifugal pulverizer.

Carbon black in the present invention refers to carbon fine particles having a particle diameter of 500 nm or less, and is generally known as a black pigment, an additive for rubber, and the like. The particle diameter of the carbon black particles in the present invention is usually one fifth or less and preferably one tenth or less of the particle diameter of the agrochemical active ingredient particles. In the present invention, use of carbon black having a particle diameter of 100 nm or less is preferred. In the present invention, the particle diameter of the carbon black particles means number-average diameter, and can be obtained by, for example, analyzing an electron micrograph image of carbon black using a commercially available software such as WINROOF (manufactured by MITANI CORPORATION), and calculating the average value of the particle diameter of 100 particles.

In the present invention, commercially available carbon black powder can be used as the carbon black particles. Examples of the commercially available carbon black powder include TOKABLACK #8500/F and TOKABLACK #7100/F manufactured by Tokai Carbon Co., Ltd.

The method for producing the present composite particles (hereinafter, referred to as the method for producing the present composite particles) will be described below.

The method for producing the present composite particles includes a step of mixing agrochemical active ingredient particles that are solid at 25°C and carbon black particles to form a layer comprising the carbon black particles on the particle surface of the agrochemical active ingredient (hereinafter, referred to as the present step). The present step is performed by a mechanical particle composing method. The mechanical particle composing method is a method for preparing composite particles using machines such as pulverizer and mixer, and is known as a technology for coating particles of a matter to be a nucleus (hereinafter, referred to as mother particles) with many particles that are a matter different from mother particles and smaller than the mother particles (hereinafter, referred to as child particles) to prepare composite particles without using a binder, by adding mechanical energy such as compression, shear, friction and impact to a mixture of the mother particles and the child particles. The technology is described in many documents, and examples of the document include "Next-generation particulate coating technologies for the development of pharmaceutical preparations" (supervised by Hideki Ichikawa, CMC Publishing Co.,Ltd., December 3, 2012, p. 111 to 118). The mechanical particle composing method can be performed by using a commercially available particle composing machine. Examples of the commercially available particle composing machine include high-speed impact dry particle composing machines such as Nara Hybridization System (registered trademark) manufactured by Nara Machinery Co., Ltd. and KRYPTRON manufactured by EARTHTECHNICACO., LTD. and compression and shearing dry particle composing machines such as MECHANO FUSION (registered trademark) manufactured by HOSOKAWA MICRON CORPORATION, NOBILTA (registered trademark) NOB manufactured by HOSOKAWA MICRON CORPORATION that is an apparatus described in JP-A-2005-270955, and Theta Composer manufactured by TOKUJU CORPORATION. The present step is preferably performed using NOBILTA.

In the present step, agrochemical active ingredient powder and carbon black powder are used as mother particles and child particles, respectively. When a compound obtained by blending agrochemical active ingredient powder and carbon black powder in a predetermined ratio is mixed with a particle composing machine, the carbon black particles adhere to the surface of the agrochemical active ingredient particles to form a layer comprising the carbon black particles. The weight ratio of the agrochemical active ingredient powder to the carbon black powder can be varied depending on particle diameter and true specific gravity of the agrochemical active ingredient particles, and particle diameter and true specific gravity of the carbon black, and is in the range of usually 4: 96 to 99.7:0.3, preferably 16: 84 to 99.4:0.6, and further preferably 25:75 to 99:1. In the present step, it is possible to charge the total amount of the agrochemical active ingredient powder and the carbon black powder at a time, or it is also possible to charge the whole amount of the agrochemical active ingredient powder and dividedly charge the carbon black powder, into a mixing vessel of the particle composing machine. When charging the total amount of the agrochemical active ingredient powder and the carbon black powder at a time into a mixing vessel of the particle composing machine, it is possible to separately charge the agrochemical active ingredient powder and the carbon black powder into the mixing vessel of the particle composing machine, or it is also possible to charge a mixture obtained by previously mixing the agrochemical active ingredient powder and the carbon black powder using a mixer such as a Nauta Mixer (registered trademark) manufactured by HOSOKAWA MICRON CORPORATION. After charging the total amount of the agrochemical active ingredient powder and the carbon black powder at a time into a mixing vessel of the particle composing machine, the powder is mixed by operating the particle composing machine, whereby the present composite particles can be obtained.

When charging the whole amount of the agrochemical active ingredient powder and dividedly charging the carbon black powder, into a mixing vessel of the particle composing machine, a step of, first, charging the whole amount of the agrochemical active ingredient powder and a part of the carbon black powder into a mixing vessel of the particle composing machine and mixing the powder by operating the particle composing machine to obtain composite particles (hereinafter, referred to as step 1) is carried out. Next, a step of adding a part of the carbon black powder and mixing the composite particles obtained in the step 1 and the carbon black powder by operating the particle composing machine to coat the composite particles with the carbon black (hereinafter, referred to as step 2) is repeatedly carried out, whereby the present composite particles can be obtained. Also, after carrying out the step 1, a part of the obtained composite particles is taken out of the machine, and the carbon black in the same amount as the taken composite particles can be added in the step 2.

The mixing intensity when mixing with a particle composing machine is in the range of usually 0.005 to 0.25 kW/g, and preferably 0.01 to 0.05 kW/g. In the present invention, the mixing intensity refers to a value obtained by dividing the power (kW) of the particle composing machine at mixing by the charge amount (g) of the powder into the mixing vessel of the particle composing machine. Also, the mixing time is usually in the range of 0.5 to 20 minutes and preferably 3 to 15 minutes.

The value of the specific surface area of the present composite particles is in the range of usually 1/2 to 1/40 and preferably 1/4 to 1/25 of the value of the specific surface area of the mixture obtained by simply mixing the agrochemical active ingredient powder and the carbon black powder. In the present invention, the specific surface area refers to a value obtained by BET method. Specifically, the specific surface area is obtained by analyzing by BET method (analysis method using a formula of BET) an adsorption-desorption isotherm obtained by determining a powder particle surface pretreated by vacuum deaeration at about 25°C for about 12 hours using BELPREP-VAC II (BEL Japan, Inc.) by a constant volume method of nitrogen adsorption method using BELSORP-mini (BEL Japan, Inc.).

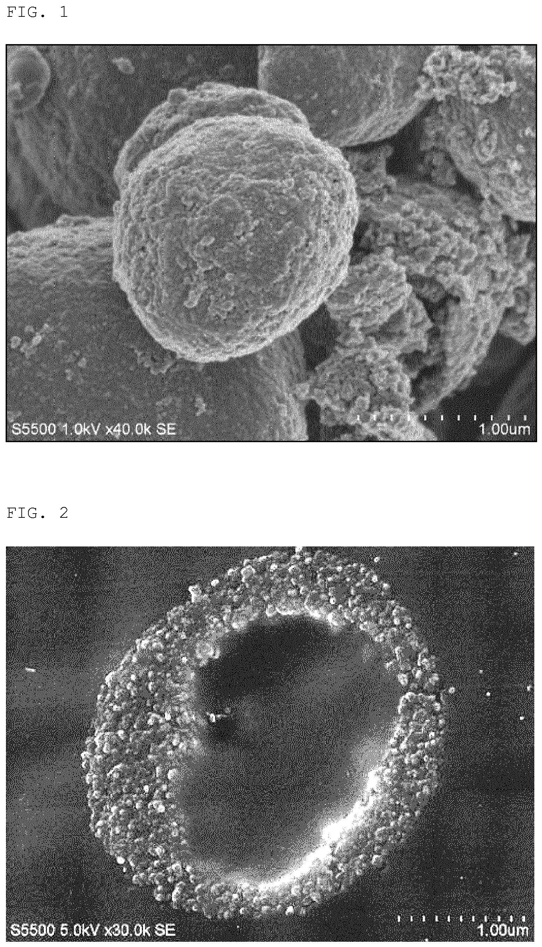

Fig. 2 is an electron micrograph of the cross section of the present composite particles. As shown in Fig. 2, the present composite particles have a layer comprising many carbon black particles on the surface of one particle of the agrochemical active ingredient (hereinafter, referred to as carbon black layer). Not all the surface of the agrochemical active ingredient particles maybe necessarily covered with carbon black. In the present invention, it is preferred that 50% or more of the surface of the agrochemical active ingredient particles is covered with carbon black, and further preferred that 100% of the surface of the agrochemical active ingredient particle is covered with carbon black. Also, it is preferred that 100% of the surface of the agrochemical active ingredient particles is covered, and also the thickness of the carbon black layer is thick. The average thickness of the carbon black layer is in the range of usually 0.01 to 100 µm, preferably 0.05 to 50 µm, and more preferably 0.1 to 20 µm.

The average thickness of the carbon black layer is obtained as below. The present composite particles are embedded in a resin, and the cross section is prepared using a microtome. In a digital image of the cross section observed with a scanning electron microscope, the agrochemical active ingredient particles, the carbon black layer and the embedded resin part outside of the present composite particles are ternarized to gray, white, and black, respectively. Thereafter, usingpixels at the boundary between the white part and the gray part as a starting point, the shortest distance from the starting point to the boundary between the white part and the black part is obtained by image analysis, and this operation is performed at all starting points. The number average of thousands to several tens of thousands of distances obtained by performing the similar image analysis for several tens to about a hundred of the present composite particles is an average thickness of the carbon black layer.

Also, the particle diameter of the present composite particles is 1.0 to 1.5 times the particle diameter of the agrochemical active ingredient particles. The present composite particles preferably have a wet sieve residue of 2% or less. In the present invention, the wet sieve residue is a value obtained by the following method. First, a formulation containing the present composite particles is diluted 100 times with ion-exchanged water, and stirred with a magnetic stirrer or the like, and the obtained dispersion liquid is passed through a sieve having 300 µm openings, and washed with tap water until the amount of residue becomes constant. Subsequently, the residue on the sieve is transferred to a petri dish, and water is evaporated, then the weight of the residue is measured. The ratio (%) of the residue weight based on the composite particles used in the test is a result of wet sieve residue.

The content of carbon black in the present composite particles is usually 0.3 to 96% by weight, preferably 0.6 to 84% by weight, and further preferably 1 to 75% by weight. Also, the weight ratio of the agrochemical active ingredient to the carbon black in the present composite particles can be varied depending on the particle diameter and true specific gravity of the agrochemical active ingredient particles, and the particle diameter and true specific gravity of the carbon black, and is in the range of usually 4:96 to 99.7:0.3, preferably 16:84 to 99.4:0.6, and further preferably 25:75 to 99:1.

The method for producing an agrochemical formulation of the present invention includes a step of formulating the present composite particles. The present composite particles can be formulated similarly as a solid agrochemical active ingredient that is not composed. Also, the present composite particles are adjusted to a desired particle size at making a composite, thus do not need to be pulverized at formulation. Formulation is performed by a known method. When the present composite particles, a solid inert carrier, and a formulation auxiliary such as binders and surfactants are mixed, it can be formulated into a solid formulation such as wettable powder, dust formulation, DL (driftless) dust formulation, granules, micro granules, micro granules F, water dispersible granules, jumbo formulation, and tablet. Also, when the present composite particles, a dispersion medium such as water and organic solvents, and a formulation auxiliary such as surfactants are mixed, it can be formulated into a liquid formulation such as suspension concentrate, aqueous emulsion formulation and oil flowable.

The formulation obtained by formulating the present composite particles can be used in the same manner as a conventional agrochemical formulation, and can be applied to places such as paddy fields, cultivated lands, orchards, grass plot,and non-agriculturallands. The formulation is mixed with water as desired, and sprayed on plants growing in the above places or the soil in the above places. The method for spraying a pesticide liquid obtained by mixing the formulation with water includes a soil surface application or foliage application using a known sprinkler or the like, and the like. It is also possible to use the pesticide liquid in a seed treatment, a seedling raising box treatment, and the like.

### Examples

Next, the present invention will be further described in detail by examples, and the like. However, the present invention is not limited only to these examples.

### Reference Production Example 1

Fenpyrazamine was dry-pulverized using a vertical jet mill (JOM-0101 model jet crusher, manufactured by Seishin Enterprise Co., Ltd.) with changing air pressure to obtain fenpyrazamine powder each having a particle diameter of 2.4 µm, 5.0 µm, 7.8 µm, and 8.3 µm (hereinafter, referred to as fenpyrazamine powder A, fenpyrazamine powder B, fenpyrazamine powder C, and fenpyrazamine powder D, respectively).

### Production Example 1

9.6 grams of fenpyrazamine powder A and 2.4 g of carbon black powder (TOKABLACK 8500/F, manufactured by Tokai Carbon Co., Ltd.) were charged into a mixing vessel of a particle composing machine (NOBILTA NOB-MINI, manufactured by HOSOKAWA MICRON CORPORATION), and mixed at a power of 330 to 390 W for 10 minutes to obtain composite particles 1a. 2.0 grams of the composite particles 1a was taken out from the mixing vessel, and 2.0 g of carbon black powder (the same as described above) was added thereto, then the mixture was mixed at a power of 280 to 290 W for 10 minutes to obtain composite particles 1b. 2.0 grams of the composite particles 1b was taken out from the mixing vessel, and 2.0 g of carbon black powder (the same as described above) was added thereto, then the mixture was mixed at a power of 270 to 280 W for 10 minutes to obtain agrochemical composite particles (1) of the present invention (hereinafter, referred to as agrochemical composite particles (1)).

### Production Example 2

92 grams of fenpyrazamine powder A and 48 g of carbon black powder (the same as described above) were charged into a mixing vessel of a particle composing machine (NOBILTA NOB-130, manufactured by HOSOKAWA MICRON CORPORATION), and mixed at a power of 3.0 kW for 20 minutes to obtain composite particles 2a. 40 grams of the composite particles 2a was taken out from the mixing vessel, and 40 g of carbon black powder (the same as described above) was added thereto, then the mixture was mixed at a power of 3.0 kW for 20 minutes to obtain composite particles 2b. 40 grams of the composite particles 2b was taken out from the mixing vessel, and 40 g of carbon black powder (the same as described above) was added thereto, then the mixture was mixed at a power of 3.0 kW for 40 minutes to obtain agrochemical composite particles (2) of the present invention (hereinafter, referred to as agrochemical composite particles (2)).

### Production Example 3

10 grams of the agrochemical composite particles (2) and 2.0 g of carbon black powder (the same as described above) were charged into a mixing vessel of a particle composing machine (NOBILTA NOB-MINI, manufactured by HOSOKAWA MICRON CORPORATION), and mixed at a power of 350 to 360 W for 10 minutes to obtain composite particles 3a. 2.0 grams of the composite particles 3a was taken out from the mixing vessel, and 2.0 g of carbon black powder (the same as described above) was added thereto, then the mixture was mixed at a power of 280 to 310 W for 10 minutes to obtain agrochemical composite particles (3) of the present invention (hereinafter, referred to as agrochemical composite particles (3)).

### Production Example 4

10 grams of the agrochemical composite particles (3) and 2.0 g of carbon black powder (the same as described above) were charged into a mixing vessel of a particle composing machine (the same as described above), and mixed at a power of 210 to 250 W for 10 minutes to obtain agrochemical composite particles (4) of the present invention (hereinafter, referred to as agrochemical composite particles (4)).

### Production Example 5

11.4 grams of fenpyrazamine powder C and 0.6 g of carbon black powder (the same as described above) were charged into a mixing vessel of a particle composing machine (the same as described above), and mixed at a power of 200 to 320 W for 10 minutes to obtain composite particles 5a. 0.6 grams of the composite particles 5a was taken out from the mixing vessel, and 0.6 g of carbon black powder (the same as described above) was added thereto, then the mixture was mixed at a power of 190 to 220 W for 10 minutes to obtain agrochemical composite particles (5) of the present invention (hereinafter, referred to as agrochemical composite particles (5)).

### Production Example 6

9.6 grams of fenpyrazamine powder D and 2.4 g of carbon black powder (the same as described above) were charged into a mixing vessel of a particle composing machine (the same as described above), and mixed at a power of 266 to 319 W for 10 minutes to obtain composite particles 6a. 2.0 grams of the composite particles 6a was taken out from the mixing vessel, and 2.0 g of carbon black powder (the same as described above) was added thereto, then the mixture was mixed at a power of 220 to 231 W for 10 minutes to obtain composite particles 6b. 2.0 grams of the composite particles 6b was taken out from the mixing vessel, and 2.0 g of carbon black powder (the same as described above) was added thereto, then the mixture was mixed at a power of 202 to 267 W for 10 minutes to obtain agrochemical composite particles (6) of the present invention (hereinafter, referred to as agrochemical composite particles (6)).

### Production Example 7

10 grams of the agrochemical composite particles (6) and 2.0 g of carbon black powder (the same as described above) were charged into a mixing vessel of a particle composing machine (the same as described above), and mixed at a power of 231 to 274 W for 10 minutes to obtain composite particles 7a. 2.0 grams of the composite particles 7 a was taken out from the mixing vessel, and 2.0 g of carbon black powder (the same as described above) was added thereto, then the mixture was mixed at a power of 148 to 235 W for 10 minutes to obtain composite particles 7b. 2.0 grams of the composite particles 7b was taken out from the mixing vessel, and 2.0 g of carbon black powder (the same as described above) was added thereto, then the mixture was mixed at a power of 78 to 122 W for 10 minutes to obtain agrochemical composite particles (7) of the present invention (hereinafter, referred to as agrochemical composite particles (7)).

### Production Example 8

Flumioxazin was dry-pulverized using a vertical jet mill (the same as described above) to obtain flumioxazin powder having a particle diameter of 3.0 µm. 10 grams of the flumioxazin powder and 2 g of carbon black powder (the same as described above) were charged into a mixing vessel of a particle composing machine (the same as described above), and mixed at a power of 270 to 300 W for 10 minutes to obtain composite particles 8a. 2 grams of the composite particles 8a was taken out from the mixing vessel, and 2 g of carbon black powder (the same as described above) was added thereto, then the mixture was mixed at a power of 240 to 270 W for 10 minutes to obtain composite particles 8b. 2 grams of the composite particles 8b was taken out from the mixing vessel, and 2 g of carbon black powder (the same as described above) was added thereto, then the mixture was mixed at a power of 210 to 260 W for 10 minutes to obtain agrochemical composite particles (8) of the present invention (hereinafter, referred to as agrochemical composite particles (8)).

### Production Example 9

9.6 grams of fenpyrazamine powder B and 2.4 g of carbon black powder (the same as described above) were charged into a mixing vessel of a particle composing machine (the same as described above), and mixed at a power of 239 to 328 W for 10 minutes to obtain composite particles 9a. 2.0 grams of the composite particles 9a was taken out from the mixing vessel, and 2.0 g of carbon black powder (the same as described above) was added thereto, then the mixture was mixed at a power of 148 to 257 W for 10 minutes to obtain agrochemical composite particles (9) of the present invention (hereinafter, referred to as agrochemical composite particles (9)).

### Production Example 10

Clothianidin was dry-pulverized using a vertical jet mill (the same as described above) to obtain clothianidin powder having a particle diameter of 3.5 µm. 9.6 grams of the clothianidin powder and 2.4 g of carbon black powder (the same as described above) were charged into a mixing vessel of a particle composing machine (the same as described above), and mixed at a power of 248 to 274 W for 10 minutes to obtain composite particles 10a. 2.0 grams of the composite particles 10a was taken out from the mixing vessel, and 2.0 g of carbon black powder (the same as described above) was added thereto, then the mixture was mixed at a power of 257 W for 10 minutes to obtain agrochemical composite particles (10) of the present invention (hereinafter, referred to as agrochemical composite particles (10)).

### Production Example 11

BACILLUS THURINGIENSIS (hereinafter, referred to as BT) was dry-pulverized using a vertical jet mill (the same as described above) to obtain BT powder having a particle diameter of 21 µm. 9.6 grams of the BT powder and 2.4 g of carbon black powder (the same as described above) were charged into a mixing vessel of a particle composing machine (the same as described above), and mixed at a power of 187 to 231 W for 10 minutes to obtain agrochemical composite particles (11) of the present invention (hereinafter, referred to as agrochemical composite particles (11)).

### Formulation Example 1

0.16 parts by weight of magnesium aluminum silicate (trade name: VEEGUM (registered trademark) R, manufactured by Vanderbilt Minerals, LLC) was added to 5.68 parts by weight of deionized water, and the mixture was stirred at room temperature for 15 minutes. 0.08 parts by weight of xanthan gum (trade name: KELZAN (registered trademark) S, manufactured by CP Kelco) and 2 parts by weight of propylene glycol were added thereto, and mixed therewith to obtain a mixture. The mixture was stirred at 60°C for 60 minutes, and the obtained dispersion liquid was cooled to room temperature, then 0.08 parts by weight of a preservative (trade name: Proxel GXL, manufactured by Lonza) was added to the dispersion liquid to obtain a viscosity adjusting liquid. 8 parts by weight of the viscosity adjusting liquid, 38.8 parts by weight of the agrochemical composite particles (2), 5 parts by weight of sodium lignin sulfonate (trade name: REAX (registered trademark) 85A, manufactured by MeadWestvaco Corporation), 0.2 parts by weight of a defoaming agent (trade name: KS-530, manufactured by Shin-Etsu Chemical Co., Ltd.) and 48 parts by weight of deionized water were mixed to obtain a suspension concentrate (1).

### Formulation Example 2

8 parts by weight of the viscosity adjusting liquid obtained in Formulation Example 1, 27.6 parts by weight of the agrochemical composite particles (4), 2.5 parts by weight of sodium lignin sulfonate (the same as described above), 0.2 parts by weight of a defoaming agent (the same as described above) and 61.7 parts by weight of deionized water were mixed to obtain a suspension concentrate (2).

### Formulation Example 3

8 parts by weight of the viscosity adjusting liquid obtained in Formulation Example 1, 27.6 parts by weight of the agrochemical composite particles (5), 2.5 parts by weight of sodium lignin sulfonate (the same as described above), 0.2 parts by weight of a defoaming agent (the same as described above) and 61.7 parts by weight of deionized water were mixed to obtain a suspension concentrate (3).

### Formulation Example 4

17.3 parts by weight of the agrochemical composite particles (2) and 12.7 parts by weight of liquid paraffin (trade name: Moresco White P-40, manufactured by MORESCO Corporation) were mixed to obtain a suspension of the agrochemical composite particles (2). 30 parts by weight of the suspension was added to 33 parts by weight of a 5% by weight aqueous solution of polyvinyl alcohol (trade name: GOHSENOL GH-17, manufactured by The Nippon Synthetic Chemical Industry Co., Ltd.), and the mixture was stirredusing a rotor-stator homogenizer (trade name : POLYTRON (registered trademark) PT6100, manufactured by Kinematica AG), and the suspension was emulsified in the aqueous solution of polyvinyl alcohol to obtain an emulsion of liquid paraffin containing the agrochemical composite particles (2) (hereinafter, referred to as an emulsion (2)).

0.4 parts by weight of magnesium aluminum silicate (the same as described above) was added to 14.2 parts by weight of deionized water, and the mixture was stirred at room temperature for 15 minutes. 0.2 parts by weight of xanthan gum (the same as described above) and 5 parts by weight of propylene glycol were added thereto, and mixed therewith to obtain a mixture. The mixture was stirred at 60°C for 60 minutes, and the obtained dispersion liquid was cooled to room temperature, then 0.2 parts by weight of a preservative (the same as described above) was added to the dispersion liquid to obtain a viscosity adjusting liquid. 20 parts by weight of the viscosity adjusting liquid, 17 parts by weight of deionized water and 63 parts by weight of the emulsion (2) were mixed to obtain an aqueous emulsion formulation (1) The average particle diameter of droplets in the aqueous emulsion formulation (1) was 26.0 µm.

### Formulation Example 5

55.8 parts by weight of the agrochemical composite particles (3), 5 parts by weight of potassium polycarboxylate (trade name: GEROPON (registered trademark) SC/213, manufactured by Rhodia), 4.0 parts by weight of potassium dihydrogenphosphate, 2.5 parts by weight of a defoaming agent (the same as described above), 32.7 parts by weight of sodium lignin sulfonate (the same as described above), and 150 parts by weight of deionized water were mixed to obtain an aqueous suspension. The aqueous suspension was spray-dried using a spray dryer (model SD-1, manufactured by TOKYO RIKAKIKAI CO, LTD) to obtain water dispersible granule (1).

### Formulation Example 6

55.8 parts by weight of the agrochemical composite particles (3), 4 parts by weight of sodium lauryl sulfate (trade name: EMAL 10PT, manufactured by Kao Corporation), 10 parts by weight of a sodium salt of specified condensate of aromatic sulfonic formalin (trade name: DEMOL SNB, manufactured by Kao Corporation), 30.2 parts by weight of agalmatolite (trade name: Shokozan clay S, manufactured by SHOKOZAN MINING Co., Ltd.) and 25 parts by weight of deionized water were kneaded using a mortar to obtain a kneaded matter. The kneaded matter was granulated using a dome granulator (extrusion diameter of φ 0.7 mm), and the resulting granule was dried with a dryer, then sized to obtain water dispersible granule (2).

### Formulation Example 7

67.8 parts by weight of the agrochemical composite particles (4), 3 parts by weight of sodium alkylnaphthalene sulphonate (Morwet (registered trademark) EFW, manufactured by Akzo Nobel N.V.), 10 parts by weight of a formalin condensate of sodium naphthalene sulfonate (Morwet (registered trademark) D-425, manufactured by Akzo Nobel N.V.) and 19.2 parts by weight of agalmatolite (the same as described above) were mixed using a mortar to obtain wettable powder (1).

### Formulation Example 8

33 parts by weight of the agrochemical composite particles (9), 3 parts by weight of sodium alkylnaphthalene sulphonate (the same as described above), 10 parts by weight of a formalin condensate of sodiumnaphthalene sulfonate (the same as described above) and 54 parts by weight of agalmatolite (the same as described above) were mixed using a juice blender to obtain wettable powder (2).

### Formulation Example 9

31 parts by weight of the agrochemical composite particles (10), 4 parts by weight of sodium alkylnaphthalene sulphonate (the same as described above), 15 parts by weight of a formalin condensate of sodiumnaphthalene sulfonate (the same as described above) and 50 parts by weight of agalmatolite (the same as described above) were mixed using a juice blender to obtain wettable powder (3).

### Formulation Example 10

5 parts by weight of the agrochemical composite particles (11), 0.13parts by weight of liquidparaffin (trade name : Driless C, manufactured by DAIICHI SANKYO COMPANY, LIMITED), 0.07 parts by weight of wet-process silica (trade name: Tokusil NP, manufactured by Tokuyama Siam Silica Co., Ltd.) and 94.8 parts by weight of dry clay (trade name: DL clay, manufactured by HAYASHI KASEI CO., LTD.) were mixed using a juice blender to obtain a dust formulation (1).

### Formulation Example 11

35 parts by weight of the agrochemical composite particles (8), 5 parts by weight of sodium alkylnaphthalene sulphonate (the same as described above), 10 parts by weight of a formalin condensate of sodiumnaphthalene sulfonate (the same as described above) and 50 parts by weight of agalmatolite (the same as described above) were mixed using a mortar to obtain wettable powder (4).

### Formulation Example 12

66.3 parts by weight of the agrochemical composite particles (6), 3 parts by weight of sodium alkylnaphthalene sulphonate (Morwet (registered trademark) EFW, manufactured by Akzo Nobel N.V.), 10 parts by weight of a formalin condensate of sodium naphthalene sulfonate (Morwet (registered trademark) D-425, manufactured by Akzo Nobel N.V.) and 20.7 parts by weight of agalmatolite (the same as described above) were mixed using a mortar to obtain wettable powder (5).

### Reference Production Example 2

52 parts by weight of fenpyrazamine powder D and 48 parts by weight of carbon black powder (the same as described above) were put in a polyethylene bag, and the polyethylene bag was vigorously shaken to mix the powders to obtain a mixture (1) of fenpyrazamine and carbon black for comparison (hereinafter, referred to as a comparative mixture (1)).

### Reference Production Example 3

31 parts by weight of fenpyrazamine powder D and 69 parts by weight of carbon black powder (the same as described above) were put in a polyethylene bag, and the polyethylene bag was vigorously shaken to mix the powders to obtain a mixture (2) of fenpyrazamine and carbon black for comparison (hereinafter, referred to as a comparative mixture (2)).

### Reference Formulation Example 1

51.2 parts by weight of fenpyrazamine having a particle diameter of 150 µm, 5 parts by weight of potassiumpolycarboxylate (the same as described above), 37.3 parts by weight of sodium lignin sulfonate (trade name: REAX (registered trademark) 80D, manufactured by MeadWestvaco Corporation), 0.5 parts by weight of a mixture of a defoaming agent (the same as described above) and deionized water (weight ratio 1:4), and 117 parts by weight of deionized water were mixed, and then wet-pulverized using a horizontal bead mill (trade name: DYNO (registered trademark)-MILL KDL, manufactured by Willy A Bachofen AG) to obtain a fenpyrazamine suspension. On the other hand, 4 parts by weight of potassium dihydrogen phosphate was dissolved in 23 parts by weight of deionized water to obtain an aqueous potassiumdihydrogen phosphate solution. The aqueous potassium dihydrogen phosphate solution and 12 parts by weight of the mixture of an antifoaming agent (the same as described above) and deionized water (weight ratio 1:4) were mixed to the fenpyrazamine suspension to obtain an aqueous suspension. The aqueous suspension was spray-dried using a fluidized bed granulating machine (STREA-1, manufactured by powrex corp.) and granulated by a method continuously performing fluidized bed granulation following the spray granulation to obtain water dispersible granule (1) for comparison (hereinafter, referred to as comparative water dispersible granule (1)).

### Reference Formulation Example 2

20 parts by weight of fenpyrazamine powder B, 13 parts by weight of carbon black powder (the same as described above), 3 parts by weight of sodium alkylnaphthalene sulphonate (the same as described above), 10 parts by weight of a formalin condensate of sodiumnaphthalene sulfonate (the same as described above) and 54 parts by weight of agalmatolite (the same as described above) were mixed using a juice blender to obtain wettable powder (1) for comparison (hereinafter, referred to as comparative wettable powder (1)).

### Reference Formulation Example 3

21 parts by weight of fenpyrazamine powder B, 5 parts by weight of sodium alkylnaphthalene sulphonate (the same as described above), 15 parts by weight of a formalin condensate of sodium naphthalene sulfonate (the same as described above) and 60 parts by weight of agalmatolite (the same as described above) were mixed using a juice blender to obtain wettable powder (2) for comparison (hereinafter, referred to as comparative wettable powder (2)).

### Reference Formulation Example 4

20 parts by weight of the clothianidin powder (particle diameter of 3.5 µm) obtained in Production Example 10, 11 parts by weight of carbon black powder (the same as described above), 5 parts by weight of sodium alkylnaphthalene sulphonate (the same as described above), 15 parts by weight of a formalin condensate of sodiumnaphthalene sulfonate (the same as described above) and 50 parts by weight of agalmatolite (the same as described above) were mixed using a juice blender to obtain wettable powder (3) for comparison (hereinafter, referred to as comparative wettable powder (3)).

### Reference Formulation Example 5

1 part by weight of the BT powder B obtained in Production Example 11, 4 parts by weight of carbon black powder (the same as described above), 0.13 parts by weight of liquid paraffin (the same as described in Formulation Example 10), 0.068 parts by weight of wet-process silica (the same as described above) and 94.8 parts by weight of dry clay (the same as described above) were mixed using a juice blender to obtain a dust formulation (1) for comparison (hereinafter, referred to as a comparative dust formulation (1)).

### Test Example 1

The agrochemical composite particles (1) were observed using a scanning electron microscope (model type: S-5500, manufactured by Hitachi, Ltd.). An electron micrograph of the agrochemical composite particles (1) is shown in Fig. 1.

### Test Example 2

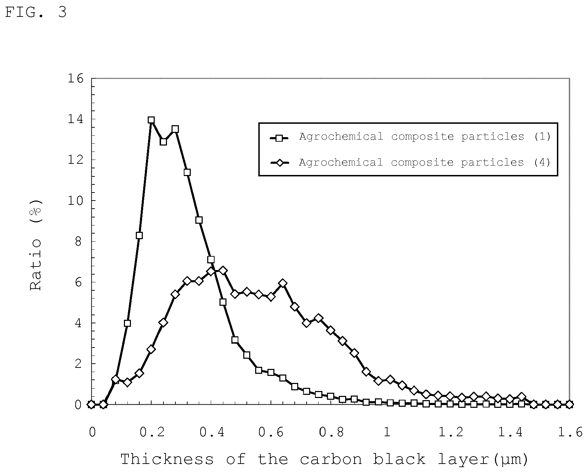

The agrochemical composite particles (1) and (4) were each embedded in an epoxy resin, and a particle cross section was prepared using a ultramicrotome (model type: Leica EM UC7, manufactured by Leica Microsystems) and a diamond knife. The particle cross section was observed using a scanning electron microscope (the same as described above). An electron micrograph of the cross section of the agrochemical composite particles (4) is shown in Fig. 2. Also, in a digital image of the observed cross section, as to 148 particles for the agrochemical composite particles (1) and 75 particles for the agrochemical composite particles (4), the agrochemical active ingredient particles, the carbon black layer and the embedded resin part outside of the present composite particles were ternarized to gray, white, and black, respectively. Thereafter, using pixels at the boundary between the white part and the gray part of each particle as a starting point, the shortest distance from the starting point to the boundary between the white part and the black part was obtained by image analysis, and this operation was performed at all starting points. Thickness distributions of each carbon black layer of the agrochemical composite particles (1) and (4) measured by obtaining number averages of distance at 36188 points (the agrochemical composite particles (1)) and 25668 points (the agrochemical composite particles (4)) obtained by performing the similar image analysis for all particles are shown in Fig. 3.

### Test Example 3

The agrochemical composite particles (6) and (7) and the comparative mixtures (1) and (2) were each pretreated by vacuum deaeration at about 25°C for about 12 hours using BELPREP-VAC II (manufactured by BEL Japan, Inc.), then the specific surface area was calculated by BET method from an adsorption-desorption isotherm measured by a constant volume method of nitrogen adsorption method using BELSORP-mini (manufactured by BEL Japan, Inc.). The result is shown in Table 1.

**[Table 1]**

| | Specific surface area (m²/g) |
|---|---|
| Agrochemical composite particles (6) | 4.2 |
| Agrochemical composite particles (7) | 19.7 |
| Comparative mixture (1) | 74.2 |
| Comparative mixture (2) | 112 |

### Test Example 4

0.2 g of the wettable powder (5) was charged into a 100-mL volume beaker containing 20 ml of ion-exchanged water, then the mixture was stirred with a magnetic stirrer to disperse the wettable powder (5). The dispersion liquid was passed through a sieve having 300 µm openings, then washed with tap water until the amount of residue became constant. The residue on the sieve was transferred to a petri dish, and water was evaporated, then the weight of the residue was measured. The residue amount was 0.02% of the amount of agrochemical composite particles contained in the wettable powder used for the test.

### Test Example 5

The suspension concentrates (1) and (2) and the comparative water dispersible granule (1) were each mixed with water so as to have a concentration of the active ingredient of 2500 ppm to each obtain a pesticide liquid. The pesticide liquid was each sprayed on the leaf surface of cucumber using a traveling sprinkler set on a sprinkled pesticide liquid amount of 100 L/ha. Thereafter, the leaf surface of cucumber was air-dried. Next, rainfall treatment was applied on cucumber so that the total amount of rainfall was 60 mm using an artificial rainfall simulator (manufactured by Daiki Rika Kogyo Co., Ltd.). Thereafter, the leaf surface of cucumber was air-dried. Subsequently, a potato decoction agar medium containing gray mold mycelium was inoculated on the leaf surface. This is defined as a treated section.

Also, the same procedure as the treated section was carried out except that spraying of the pesticide liquid was not conducted. This is defined as a non-treated section.

Thereafter, the cucumber was placed at 20°C under high humidity for 4 days, then the diameter of lesions formed on the leaf surface of the cucumber was measured. As a result, while a lesion with 90% of the diameter of that in the non-treated section was found on the leaf surface on which the comparative water dispersible granule (1) was sprayed, no lesion was found on the leaf surface on which the suspension concentrate (1) or (2) was sprayed.

### Test Example 6

The suspension concentrates (1), (2) and (3) and the comparative water dispersible granule (1) were each mixed with water so as to have a concentration of the active ingredient of 50 ppm to each obtain a pesticide liquid. The pesticide liquid was sprayed on the leaf surface of cucumber using a traveling sprinkler set on a sprinkled pesticide liquid amount of 1000 L/ha. After exposed to sunlight on fine days for 6 days from the day after spraying, a potato decoction agar medium containing gray mold mycelium was inoculated on the leaf surface. This is defined as a treated section.

Also, the same procedure as the treated section was carried out except that spraying of the pesticide liquid was not conducted. This is defined as a non-treated section.

Thereafter, the cucumber was placed under high humidity for 8 days, then the diameter of lesions formed on the leaf surface of the cucumber was measured. As a result, while a lesion with 37% of the diameter of that in the non-treated section was found on the leaf surface on which the comparative water dispersible granule (1) was sprayed, no lesion was found on the leaf surface on which the suspension concentrate (1), (2) or (3) was sprayed.

### Test Example 7

The wettable powder (2) and the comparative wettable powders (1) and (2) were each mixed with water so as to have a concentration of the active ingredient of 50 ppm to each obtain a pesticide liquid. 50 mL of the pesticide liquid was sprayed on the leaf surface of cucumber with a spray gun. After managed in a greenhouse for a week from the day after spraying, a potato decoction agar medium containing genera sclerotinia was inoculated on the leaf surface. This is defined as a treated section.

Also, the same procedure as the treated section was carried out except that spraying of the pesticide liquid was not conducted. This is defined as a non-treated section.

Thereafter, the cucumber was placed under high humidity for 3 days, then the diameter of lesions formed on the leaf surface of the cucumber was measured. As a result, while lesions with 18% and 61% of the diameter of that in the non-treated section were each found on the leaf surface on which the comparative wettable powders (1) and (2) were each sprayed, no lesion was found on the leaf surface on which the wettable powder (2) was sprayed.

### Test Example 8

The wettable powder (2) and the comparative wettable powders (1) and (2) were each mixed with water so as to have a concentration of the active ingredient of 100 ppm to each obtain a pesticide liquid. 50 mL of the pesticide liquid was sprayed on the leaf surface of cucumber. Thereafter, the leaf surface of cucumber was air-dried. Next, rainfall treatment was applied on cucumber so that the total amount of rainfall was 10 mm using an artificial rainfall simulator, then the leaf surface of cucumber was air-dried. Subsequently, a potato decoction agar medium containing mycelium of Sclerotinia was inoculated on the leaf surface. This is defined as a treated section.

Also, the same procedure as the treated section was carried out except that spraying of the pesticide liquid was not conducted. This is defined as a non-treated section.

Thereafter, the cucumber was placed under high humidity for 3 days, then the diameter of lesions formed on the leaf surface of the cucumber was measured. As a result, while lesions with 20% and 29% of the diameter of that in the non-treated section were each found on the leaf surface on which the comparative wettable powders (1) and (2) were each sprayed, a lesion with 10% of the diameter of that in the non-treated section was found on the leaf surface on which the wettable powder (2) was sprayed.

### Test Example 9

The wettable powder (3) and the comparative wettable powder (3) were each mixed with a spreading agent (trade name: Shindain) solution diluted 5000 times (using ion-exchanged water) so as to have a concentration of the active ingredient of 1000 ppm to each obtain a pesticide liquid. 25 mL of the pesticide liquid was sprayed on 6 heads of potted cabbage with a spray gun. After spray treatment, the cabbage was managed in a glass house. This is defined as a treated section.

Also, the same procedure as the treated section was carried out except that spraying of the pesticide liquid was not conducted. This is defined as a non-treated section.

After 9 weeks, the number of Thrips tabaci Lindeman parasitic on the cabbage was all counted. As a result, while 201 parasites in the non-treated section and 159 parasites in the treated section on which the comparative wettable powder (3) was sprayed were found, 75 parasites were found in the treated section on which the wettable powder (3) was sprayed.

### Test Example 10

Each 3120 mg of the dust formulation (1) and the comparative dust formulation (1) was sprayed on 6 heads of potted cabbage with a small manual dust formulation sprinkler. After spray treatment, the cabbage was managed in a glass house. This is defined as a treated section.

Also, the same procedure as the treated section was carried out except that spraying of the pesticide was not conducted. This is defined as a non-treated section.

After 4 weeks, one leaf was cut off from each head and placed in a 500-ml plastic cup with 10 second-instar larvae of Plutella xylostella, and after 7 days, the insect mortality (including toxication) rate was investigated. As a result, while the insect mortality (including toxication) rate was 10% in the non-treated section and 37% in the treated section on which the comparative dust formulation (1) was sprayed, the insect mortality rate was 83% in the treated section on which the dust formulation (1) was sprayed.

The present composite particles can be easily formulated. An agrochemical formulation obtained by formulating the present composite particles can improve rain resistance and residual efficacy, even when a farmer does not mix an efficacy-enhancing component on an application.

## Claims

1. A method for producing agrochemical composite particles, comprising a step of mixing agrochemical active ingredient particles that are solid at 25°C and carbon black particles to form a layer comprising the carbon black particles on the particle surface of the agrochemical active ingredient, wherein the step is performed by a mechanical particle composing method.

2. The method for producing agrochemical composite particles according to claim 1, wherein the particle diameter of the agrochemical active ingredient particles is in the range of 0.5 to 200 µm.

3. The method for producing agrochemical composite particles according to claim 1 or 2, wherein the particle diameter of the carbon black particles is one fifth or less of the particle diameter of the agrochemical active ingredient particles.

4. A method for producing an agrochemical formulation, comprising a step of formulating agrochemical composite particles produced by the method for producing agrochemical composite particles as defined in any one of claims 1 to 3.

5. A method for enhancing an efficacy of an agrochemical active ingredient, comprising a step of mixing agrochemical active ingredient particles that are solid at 25°C and carbon black particles to form a layer comprising the carbon black particles on the particle surface of the agrochemical active ingredient.

6. Agrochemical composite particles comprising carbon black and an agrochemical active ingredient that is solid at 25°C, having a layer comprising the carbon black particles on the particle surface of the agrochemical active ingredient.
